# EUROPÄISCHE PATENTSCHRIFT

(11) **EP 3 078 258 B1**
(45) Veröffentlichungstag und Bekanntmachung des Hinweises auf die Patenterteilung: **20.07.2022**
(21) Anmeldenummer: 16154954.8
(22) Anmeldetag: 10.02.2016
(51) Int. Cl.: A01F 15/08

(54) **RUNDBALLENPRESSE MIT BALLENWICKELEINRICHTUNG**
ROUND BALER WITH BALE WRAPPING DEVICE
PRESSE À BALLES RONDES ÉQUIPÉE D'UNE ENRUBANNEUSE

(30) Priorität: 08.04.2015 DE 102015004275
(43) Veröffentlichungstag der Anmeldung: 12.10.2016
(73) Patentinhaber: Usines CLAAS France S.A.S, 57140 St. Rémy / Woippy (FR)
(72) Erfinder: Cazaban-Mazerolles, Benoit, 57130 Sainte Ruffine (FR); Scharf, Thorsten, 66693 Mettlach (DE)
(74) Vertreter: CLAAS Gruppe

(56) Entgegenhaltungen:
- EP-A1- 2 630 857
- EP-B1- 1 370 128
- WO-A1-00/36903
- US-A- 3 974 632

## Beschreibung

Die vorliegende Erfindung betrifft eine Rundballenpresse mit einer Presskammer zum Verdichten von landwirtschaftlichem Erntegut zu einem Ballen und mit einer Ballenwickeleinrichtung zum Umwickeln des fertigen Ballens mit Hüllmaterial, typischerweise mit einer Folie, die den Ballen luftdicht einschließt und so eine Silierung des Ernteguts bewirkt.

Herkömmliche Rundballenpressen dieser Art haben meist ein zweiteiliges Gehäuse mit einem Basisabschnitt und einem Heckklappenabschnitt, der hochklappbar ist, um einen fertigen Ballen aus der Presskammer auszugeben. Damit der Ballen seinem Eigengewicht folgend aus der Presskammer herausrollen kann, muss eine Grenze, an der der Basisabschnitt und der Heckklappenabschnitt auseinander bewegt werden, in der Nähe des tiefsten Punkts der Presskammer liegen. Deswegen muss der Heckklappenabschnitt beim Hochschwenken weit nach hinten ausschwenken, und ein großer Abstand ist zwischen der Presskammer und der Ballenwickeleinrichtung erforderlich, damit die Presskammer wieder geschlossen werden und weiterarbeiten kann, während sich ein soeben ausgegebener Ballen noch an der Ballenwickeleinrichtung befindet.

Aus EP 1 370 128 B1 ist eine Ballenpresse mit Ballenwickeleinrichtung bekannt, bei der ein oberer Heckklappenabschnitt eine obere Hälfte des in etwa zylinderförmigen Presskammergehäuses bildet. Wenn dieser Heckklappenabschnitt um eine an seiner vorderen Kante verlaufende Achse hochgeschwenkt wird, schwenkt er nicht zwar nach hinten aus, doch genügt dies nicht, damit der Ballen die Presskammer verlassen und die dahinter angeordnete Ballenwickeleinrichtung erreichen kann. Um dies zu ermöglichen, ist die untere Hälfte der Presskammer in einen Basisabschnitt, der beim Ausgeben des Ballens unbewegt bleibt, und einen unteren Heckklappenabschnitt unterteilt, der sich von hinten bis unter den Schwerpunkt des Ballens erstreckt und der um eine Achse, die der Schwenkachse des oberen Heccklappenabschnitts diametral gegenüberliegt, schwenkend bis in eine Stellung anhebbar ist, in der der Ballen über diese zweite Schwenkachse hinweg auf einen dahinter liegenden Wickeltisch rollt.

Um die Bewegung des unteren Heckklappenabschnitts anzutreiben, sind Stellzylinder mit hoher Belastbarkeit und langem Hubweg erforderlich, da der schwere fertige Ballen angehoben und über die Achse des unteren Heckklappenabschnitts hinweg gehievt werden muss.

Der Wickeltisch darf nicht zu tief unter der Achse des unteren Heckklappenabschnitts angeordnet sein, da anderenfalls die Gefahr besteht, dass der Ballen nach Überwinden der Achse zu viel Schwung aufnimmt und über den Wickeltisch hinweg rollt. Der Schwerpunkt des Ballens liegt daher auf dem Wickeltisch deutlich höher als in der Presskammer, was die Kippsicherheit der Presse beim Einsatz auf schrägem Untergrund beeinträchtigt.

Eine Aufgabe der Erfindung ist, eine Rundballenpresse mit integrierter Ballenwickeleinrichtung zu schaffen, die kompakt baut und die zum Verlagern des Ballens von der Presskammer zur Ballenwickeleinrichtung mit Stellantrieben geringer Leistung auskommt.

Eine andere Aufgabe ist, eine kompakte Rundballenpresse zu schaffen, bei der die Gefahr des Kippens auf schrägem Untergrund auch dann gering ist, wenn sich ein Ballen auf der Ballenwickeleinrichtung befindet.

Die Aufgabe wird gelöst, indem bei einer Rundballenpresse mit einem eine Presskammer umgebenden, Gehäuse, das einen Basisabschnitt, einen aus einer Pressstellung anhebbaren oberen Heckklappenabschnitt und einen unteren Heckklappenabschnitt umfasst, und mit einer Ballenwickeleinrichtung, die einen hinter dem Gehäuse der Presskammer angeordneten Wickeltisch umfasst, der untere Heckklappenabschnitt zum Ausgeben eines Ballens aus der Presskammer absenkbar ist. Um den Heckklappenabschnitt und mit ihm den Ballen kontrolliert abzusenken, ist keine Antriebskraft, sondern allenfalls eine kontrollierte Bremsung erforderlich, und auch eine anschließende Wiederanhebung des unteren Heckklappenabschnitts erfordert nur geringe Kraft, wenn der Ballen wenigstens nicht mehr vollständig auf dem unteren Heckklappenabschnitt ruht.

Um die Gefahr, dass der Ballen über den Wickeltisch hinwegrollt, zu minimieren, ist zwischen der Presskammer und dem Wickeltisch eine Zwischenstellung für den Ballen vorgesehen, in der dieser von einem vorderen Rand des Wickeltischs und einer vertikal beweglichen Stütze getragen ist. Da sich das Gewicht des Ballens in dieser Zwischenstellung auf den Wickeltisch und die Stütze verteilt, genügt zum Anheben der Stütze eine Kraft, die deutlich kleiner ist als das Gewicht des Ballens.

Durch Anheben der Stütze gelangt der Ballen in eine Wickelstellung auf dem Wickeltisch.

Der Wickeltisch kann eine vordere und eine hintere Rolle umfassen, die in der Wickelstellung den Ballen tragen und die zum Umwickeln des Ballens drehantreibbar sind.

Die vordere Rolle kann unmittelbar den vorderen Rand des Wickeltischs bilden, der den Ballen in der Zwischenstellung unterstützt.

Um die Übernahme des zu umwickelnden Ballens oder das Absetzen des Ballens nach dem Umwickeln zu erleichtern, können die Rollen des Wickeltischs in einem schwenkbar aufgehängten Rahmen gelagert sein. Alternativ kann die vordere Rolle durch einen Lenker gehalten sein, der unabhängig von der hinteren Rolle um eine hinter der vorderen Rolle gelegene Achse schwenkbar ist.

Die Stütze kann getrennt von dem unteren Heckklappenabschnitt anhebbar sein.

Einer bevorzugten Ausgestaltung zu Folge ist jedoch die Stütze durch einen hinteren Rand des unteren Heckklappenabschnitts selber gebildet.

Insbesondere kann der untere Heckklappenabschnitt eine Gruppe von Pressrollen enthalten, von denen eine den besagten hinteren Rand bildet.

Alternativ kann der hintere Rand durch eine Rolle, Stange oder eine andere zum Unterstützen des Ballens geeignete Kontur gebildet sein, die außerhalb des Pressrollenkreises angeordnet ist. Eine solche weit nach hinten vorspringende Kontur ist insbesondere hilfreich, um auch Ballen von kleinem Durchmesser auf den Wickeltisch zu schieben.

Zum Absenken ist der untere Heckklappenabschnitt vorzugsweise um eine erste Achse schwenkbar, die benachbart zu einem vorderen Rand des unteren Heccklappenabschnitts verläuft.

Zusätzlich kann der untere Heckklappenabschnitt in die Presskammer hinein schwenkbar sein, um diese während einer Anfangsphase der Ballenbildung zu verkleinern und so eine Verdichtung des Ernteguts bereits in einer frühen Phase der Ballenbildung zu ermöglichen.

Zum Schwenken des unteren Heckklappenabschnitts in die Presskammer hinein kann eine zweite Achse vorgesehen sein, die zu einem hinteren Rand des unteren Heckklappenabschnitts benachbart ist.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Schnittdarstellung einer Ballenpresse gemäß einer ersten Ausgestaltung der Erfindung während des Pressbetriebs;
- Fig. 2: die Ballenpresse der Fig. 1 bei einem ersten Schritt der Übergabe eines fertigen Ballens an die Ballenwickeleinrichtung;
- Fig. 3: die Ballenpresse der Fig. 1 mit auf den Wickeltisch der Ballenwickeleinrichtung übergeladenem Ballen;
- Fig. 4: eine Weiterentwicklung der in Fig. 1-3 gezeigten Ballenpresse;
- Fig. 5: eine Ballenpresse gemäß einer zweiten Ausgestaltung der Erfindung bei einem ersten Schritt der Übergabe eines Ballens aus der Presskammer an die Ballenwickeleinrichtung;
- Fig. 6: einen zweiten Schritt der Ballenübergabe;
- Fig. 7: einen dritten Schritt;
- Fig. 8: den Ballen während des Umwickelns;
- Fig. 9: eine Ballenpresse gemäß einer dritten Ausgestaltung bei einem ersten Schritt der Übergabe eines Ballens an die Ballenwickeleinrichtung;
- Fig. 10: einen zweiten Schritt der Übergabe; und
- Fig. 11: die Ballenpresse nach Übergabe des Ballens an die Wickeleinrichtung.

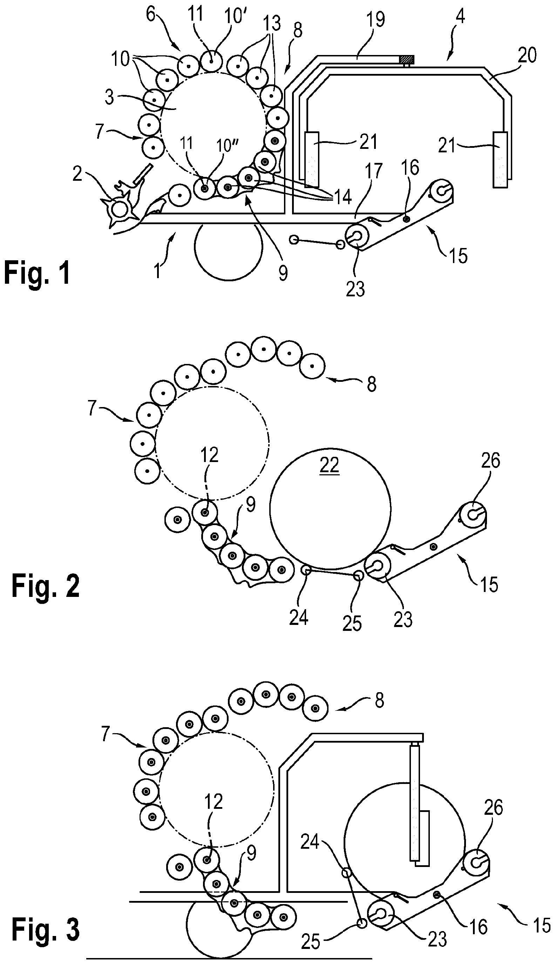

Fig. 1 zeigt eine Festkammer-Ballenpresse gemäß einer ersten Ausgestaltung der Erfindung in einem schematischen Schnitt. Auf einem an eine Zugmaschine anzukoppelnden Fahrgestell 1 sind von vorne nach hinten aufeinanderfolgend eine Erntegut-Aufnahme- und -Zerkleinerungsvorrichtung 2, eine Presskammer 3 und eine Ballenwickeleinrichtung 4 angeordnet.

Ein Gehäuse 6 der Presskammer 3 umfasst einen am Fahrwerk 1 festen Basisabschnitt 7, einen oberen Heckklappenabschnitt 8 und einen unteren Heckklappenabschnitt 9, auf die sich zahlreiche rings um die Presskammer 3 herum angeordnete Pressrollen 10 verteilen. Die Pressrollen 10 des Basisabschnitts 7 nehmen die gesamte vordere Hälfte des Umfangs der Presskammer 3 ein. Eine oberste dieser Rollen, mit 10' bezeichnet, hat eine Drehachse 11, die gleichzeitig eine Schwenkachse des oberen Heckklappenabschnitts 8 bildet. Entsprechend fällt eine Drehachse 12 einer untersten Rolle 10" des Basisabschnitts 7 mit einer Schwenkachse des unteren Heccklappenabschnitts 9 zusammen. Fig. 1 zeigt die Heckklappenabschnitte 8, 9 in einer Pressstellung, in der ihre Pressrollen 13 bzw. 14 zusammen mit den Rollen 10 des Basisabschnitts 7 auf einem Kreisbogen um die Presskammer 3 herum angeordnet sind.

Die Ballenwickeleinrichtung 4 umfasst einen Wickeltisch 15, der um eine quer zur Fahrtrichtung bzw. zur Schnittebene der Fig. 1 orientierte Achse 16 schwenkbar zwischen zwei Längsträgern 17 des Fahrgestells 1 aufgehängt ist. Von den beiden Längsträgern 17 ragt unmittelbar hinter der Presskammer 3 jeweils eine Säule 18 auf, und die beiden Säulen 18 sind an ihren oberen Enden durch einen in der Draufsicht U-förmigen Querbalken 19 verbunden. An dem Querbalken 19 ist mittig ein um eine vertikale Achse drehbarer Bogen 20 aufgehängt. An den Enden des Bogens 20 ist jeweils eine Folien-Vorratsrolle 21 angebracht, deren Folie, wenn sich ein Ballen auf dem Wickeltisch 15 befindet, durch Drehen des Bogens 20 um die vertikale Achse um den Ballen herumgewickelt wird.

Fig. 2 zeigt die Ballenpresse der Fig. 1 in einer ersten Phase der Übergabe eines fertigen Ballens 22 aus der Presskammer 3 an die Ballenwickeleinrichtung 4. Um die Presskammer nach hinten zu öffnen, sind der obere Heckklappenabschnitt 8 um die Drehachse 11 aufwärts und der untere Heckklappenabschnitt 9 um die Achse 12 abwärts geschwenkt. Durch die Abwärtsbewegung des unteren Heckklappenabschnitts 9 ist auch der Ballen 22 gegenüber seiner ursprünglichen Leitpositionen in der Presskammer 3 deutlich abgesenkt. Er ruht auf einer vorderen Rolle 23 des Wickeltischs 15 sowie auf einem als Stange oder schlanke Rolle ausgebildeten Stütze 24, die auf in etwa gleicher Höhe mit der vorderen Rolle 23 liegt, so dass das Gewicht des Ballens 22 sich zu etwa gleichen Teilen auf die Stütze 24 und die Rolle 23 verteilt. Der untere Heckklappenabschnitt 9 ist soweit abgesenkt, dass dessen Rollen 13 keinen Kontakt mehr mit dem Ballen 22 haben.

In einem nächsten Schritt wird die Stütze 24 um eine am Fahrgestell 1 feste Achse 25 in der Nähe der vorderen Rolle 23 aufwärts geschwenkt, um den Ballen 22 anzuheben und über die vordere Rolle 23 hinweg zu hieven. Zeitgleich oder kurz vorher kann auch der untere Heckklappenabschnitt 9 angehoben werden, so dass sich die zum Anheben des Ballens 22 zu leistende Arbeit auf Antriebe des unteren Heccklappenabschnitts 9 und der Stütze 24 verteilt und Antriebe mit geringer Leistung für beide verwendet werden können.

In der in Fig. 3 gezeigten Phase hat der Ballen auf diese Weise die vordere Rolle 23 überwunden und ruht auch auf einer hinteren Rolle 26 des Wickeltischs 15. Der Bogen 20 ist gegen die in Fig. 1 gezeigte Stellung um 90° gedreht, so dass seine Arme den Wege des Ballens 22 nicht blockieren. Wenn der Wickeltisch 15 in die Horizontale geschwenkt ist, liegt der Schwerpunkt des Ballens 22 zwischen den zwei Vorratsrollen 21. Während der Bogen 20 gewählt wird, um die Vorratsrollen 21 um den Ballen herum zu bewegen, werden auch die Rollen 23, 26 drehangetrieben, so dass im Laufe mehrerer Umdrehungen des Bogens 20 die ganze Oberfläche des Ballens mit Folie überzogen ist. Um den fertig umwickelten Ballen 22 abzusetzen, genügt es, den Wickeltisch 15 und die Achse 16 weiter zu schwenken, bis der Ballen 22 auf den Boden fällt.

Noch bevor mit dem Umwickeln des Ballens 22 begonnen wird, können die Heckklappenabschnitte 8, 9 in die Konfiguration der Fig. 1 zurückgeschwenkt werden, um mit dem Verdichten von Erntegut für einen neuen Ballen zu beginnen.

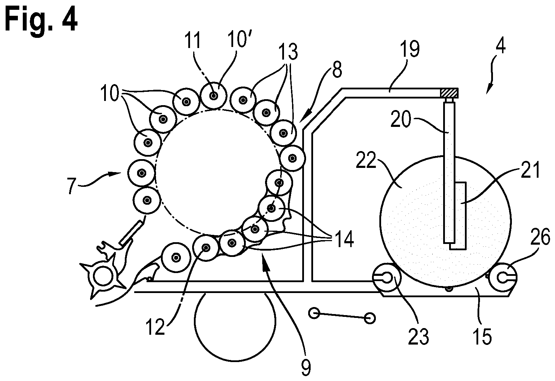

Fig. 4 zeigt die Ballenpresse während des Umwickelns des fertigen Ballens und des Beginns der Erzeugung des nächsten Ballens gemäß einer weiterentwickelten Abwandlung. Der untere Heckklappenabschnitt 9 ist hier ferner die Achse 12 in die Presskammer 3 hinein schwenkbar, und um diese zu verkleinern und so bereits eine kleine Menge Erntegut wirksam verdichten zu können.

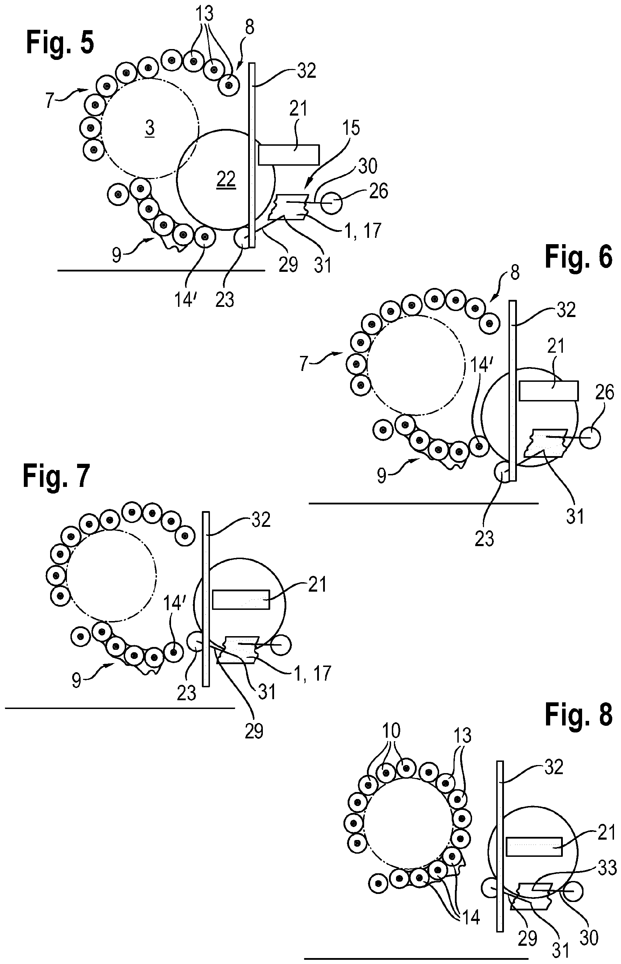

Fig. 5 zeigt eine zweite Ausgestaltung der erfindungsgemäßen Ballenpresse, wobei der Einfachheit halber vom Fahrgestell 1 nur ein kurzes Bruchstück eines der Längsträger 17 dargestellt ist. Das Gehäuse der Presskammer 3 ist auch hier in einen am Fahrgestell 1 festen Basisabschnitt 7, einen oberen Heckklappenabschnitt 8, der aus einer Pressstellung um eine Achse 11 aufwärts in die gezeigte Stellung schwenkbar ist, und einen unteren Heckklappenabschnitt 9 gegliedert, der aus der Pressstellung um eine Achse 12 abwärts geschwenkt ist.

Der Ballen 22 befindet sich gerade in einer Zwischenstellung zwischen der Presskammer 3 und dem Wickeltisch 15, in der einerseits eine Rolle 14' an der rückwärtigen Kante des unteren Heckklappenabschnitts 9 und andererseits die vordere Rolle 23 des Wickeltischs 15 als seine Stützen fungieren. Die zwei Rollen 23, 26 des Wickeltischs 15 sind hier über zwei einzeln schwenkbare Lenker 29, 30 mit dem Fahrgestell 1 verbunden. Der Lenker 29 der vorderen Rolle 23 ist um eine am Fahrgestell 1 feste Achse 31 abwärts geschwenkt, so dass sich die Rollen 23 und 13' auf gleicher Höhe befinden.

Indem der untere Heckklappenabschnitt 9 wieder aufwärts geschwenkt wird, wie in Fig. 6 gezeigt, wird der Ballen 22 über die vordere Rolle 23 hinweg gehievt und kommt auf dieser und der hinteren Rolle 26 des Wickeltischs 15 zu liegen.

Im nächsten Schritt und wie in Fig. 7 gezeigt, wird der Lenker 29 aufwärts geschwenkt, um die Rollen 23, 26 auf gleiche Höhe und den Ballen 22 in eine Stellung anzuheben, in der sein Mittelpunkt auf gleicher Höhe mit dem Mittelpunkt eines Rings 32 zu liegen kommt, durch den der Ballen 22 zuvor beim Verlassen der Presskammer 3 hindurchgerollt ist und an dem ein oder zwei Vorratsrollen 21 zum Bewickeln des Ballens mit Folie montiert sind.

Nachdem die Heckklappenabschnitte 8, 9 in die in Fig. 8 gezeigte Pressstellung zurückgekehrt sind oder noch während ihrer Rückkehr in die Pressstellung wird der Ring 32 in Drehung versetzt um die Vorratsrollen 21 um den Ballen 22 herum zu bewegen, und gleichzeitig werden die Rollen 23, 26 drehangetrieben, so dass im Laufe mehrerer Umdrehungen des Rings 32 die Oberfläche des Ballens 22 komplett mit Folie überzogen wird.

Um den fertig verpackten Ballen 22 auszugeben, wird der hintere Lenker 30 um eine Achse 33 abwärts geschwenkt, bis der Ballen am Heck der Presse herabfällt.

Auch hier kann der untere Heckklappenabschnitt 9 wie in Fig. 4 gezeigt in die Presskammer 3 hinein klappbar sein, um zu Beginn der Erzeugung eines neuen Ballens das Volumen der Presskammer 3 zu verkleinern.

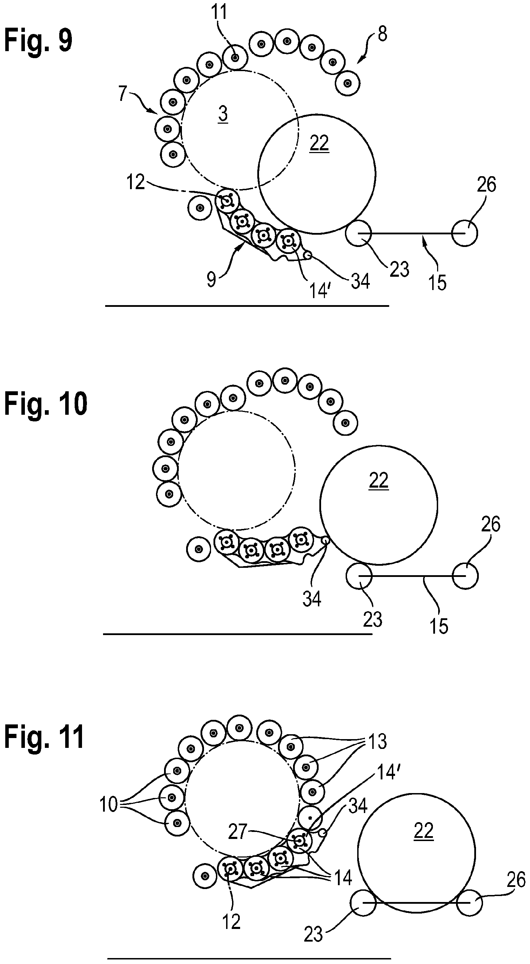

Fig. 9 zeigt den Beginn der Ausgabe eines fertigen Ballens 22 aus der Presskammer 3 einer Ballenpresse gemäß einer dritten Ausgestaltung der Erfindung. In der abgesenkten Stellung des unteren Heckklappenabschnitts 9 ruht der Ballen 22 auf der hintersten Pressrolle 14' des unteren Heckklappenabschnitts 9, die sich hier in etwa gleicher Höhe mit der vorderen Rolle 23 des Wickeltischs 15 befindet. Der untere Heckklappenabschnitt 9 ist hier nach hinten um eine weitere schlanke Rolle 34 oder Stange verlängert, die außerhalb eines Kreises liegt, auf dem die Pressrollen 14 angeordnet sind.

Die Rolle 34 kommt erst dann in Kontakt mit dem Ballen 22, wenn der Heckklappenabschnitt 9 wie in Fig. 10 gezeigt wieder angehoben wird, und dient dann dazu, den Ballen 22 über die vordere Rolle 23 hinweg auf den Wickeltisch 15 zu schieben. Auf diese Weise wird der Weg freigemacht, damit der obere Heckklappenabschnitt 8 in seine in Fig. 11 gezeigte Pressstellung zurückkehren kann.

Fig. 11 zeigt den Ballen 22 auf dem Wickeltisch 15. Beide Heckklappenabschnitte 8, 9 haben die Pressstellung wieder erreicht, in der die Pressrollen 10, 13, 14 der Gehäuseabschnitte 7, 8, 9 sämtlich auf einem gleichen Kreis liegen.

Um den Ballen 22 auf dem Wickeltisch 15 zu umwickeln, kann wahlweise der um eine vertikale Achse drehbare Bogen 20 der ersten Ausgestaltung oder der Ring 32 der zweiten vorgesehen sein.

Ferner kann auch hier der untere Heckklappenabschnitt 9 um die durch dessen vorderste Pressrolle 14' verlaufende Achse 12 in die Presskammer 3 hinein schwenkbar sein, um den Beginn der Ballenbildung zu erleichtern.

### Bezugszeichen

- 1: Fahrgestell
- 2: Erntegutaufnahme- und -Zerkleinerungsvorrichtung
- 3: Presskammer
- 4: Ballenwickeleinrichtung
- 6: Gehäuse
- 7: Basisabschnitt
- 8: oberer Heckklappenabschnitt
- 9: unterer Heckklappenabschnitt
- 10: Pressrolle
- 11: Drehachse
- 12: Drehachse
- 13: Pressrolle
- 14: Pressrolle
- 15: Wickeltisch
- 16: Achse
- 17: Längsträger
- 18: Säule
- 19: Querbalken
- 20: Bogen
- 21: Vorratsrolle
- 22: Ballen
- 23: vordere Rolle
- 24: Stütze
- 25: Achse
- 26: hintere Rolle
- 29: Lenker
- 30: Lenker
- 31: Achse
- 32: Ring
- 33: Achse
- 34: Rolle

## Patentansprüche

1. Rundballenpresse mit einem eine Presskammer (3) umgebenden Gehäuse (6), das einen Basisabschnitt (7), einen aus einer Pressstellung anhebbaren oberen Heckklappenabschnitt (8) und einen unteren Heckklappenabschnitt (9) umfasst, und mit einer Ballenwickeleinrichtung (4), die einen hinter dem Gehäuse (6) angeordneten Wickeltisch (15) umfasst, **dadurch gekennzeichnet, dass** zum Ausgeben eines Ballens (22) aus der Presskammer (3) der untere Heckklappenabschnitt (9) absenkbar ist,
in der abgesenkten Stellung des unteren Heckklappenabschnitts (9) der Ballen (22) von einem vorderen Rand des Wickeltischs (15) und einer vertikal beweglichen Stütze (14', 24, 34) tragbar ist und die Stütze (14', 24, 34) anhebbar ist, um den Ballen (22) in eine Wickelstellung auf dem Wickeltisch (15) zu verlagern.

2. Rundballenpresse nach Anspruch 1, **dadurch gekennzeichnet, dass** der Wickeltisch (15) eine vordere und eine hintere Rolle (23, 26) umfasst, die in der Wickelstellung den Ballen (22) tragen und zum Umwickeln des Ballens (22) drehantreibbar sind.

3. Rundballenpresse nach Anspruch 2, **dadurch gekennzeichnet, dass** die vordere Rolle (23) den vorderen Rand des Wickeltischs (15)bildet.

4. Rundballenpresse nach Anspruch 2 oder 3, **dadurch gekennzeichnet, dass** die Rollen (23, 26) des Wickeltischs (15) in einem schwenkbar aufgehängten Rahmen gelagert sind.

5. Rundballenpresse nach Anspruch 2 oder 3, **dadurch gekennzeichnet, dass** die vordere Rolle (23) durch einen Lenker (29) gehalten ist, der unabhängig von der hinteren Rolle (26) um eine hinter der vorderen Rolle (23) gelegene Achse schwenkbar ist.

6. Rundballenpresse nach einem der Ansprüche 1 bis 5, **dadurch gekennzeichnet, dass** die Stütze (24) getrennt von dem unteren Heccklappenabschnitt (9) anhebbar ist.

7. Rundballenpresse nach einem der Ansprüche 1 bis 5, **dadurch gekennzeichnet, dass** die Stütze (14', 34) durch einen hinteren Rand des unteren Heckklappenabschnitts (9) gebildet ist.

8. Rundballenpresse nach Anspruch 7, **dadurch gekennzeichnet, dass** der untere Heckklappenabschnitt (9) eine Gruppe von Pressrollen (14) enthält, von denen eine (14') den hinteren Rand bildet.

9. Rundballenpresse nach Anspruch 7, **dadurch gekennzeichnet, dass** die Stütze (34) außerhalb eines Kreises der Pressrollen (10, 13, 14) angeordnet ist.

10. Rundballenpresse nach einem der vorhergehenden Ansprüche, **dadurch gekennzeichnet, dass** der untere Heckklappenabschnitt (9) durch Schwenken um eine erste Achse (12) absenkbar ist, die benachbart zu einem vorderen Rand des unteren Heckklappenabschnitts (9) verläuft.

11. Rundballenpresse nach einem der vorhergehenden Ansprüche, **dadurch gekennzeichnet, dass** der untere Heckklappenabschnitt (9) in die Presskammer (3) hinein schwenkbar ist, während der obere Heckklappenabschnitt (8) sich in der Pressstellung befindet.

12. Rundballenpresse nach Anspruch 11, **dadurch gekennzeichnet, dass** der untere Heckklappenabschnitt (9) in die Presskammer (3) hinein um eine zu einem hinteren Rand des unteren Heckklappenabschnitts (9) benachbarte zweite Achse (27) schwenkbar ist.

## Claims

1. A round baler with a housing (6) enclosing a bale chamber (3), which comprises a base section (7), an upper tailgate section (8) which can be raised out of a baling position and a lower tailgate section (9), and with a bale wrapping device (4) which comprises a wrapping table (15) disposed behind the housing (6), **characterized in that** the lower tailgate section (9) can be lowered in order to eject a bale (22) from the bale chamber (3), in the lowered position of the lower tailgate section (9), the bale (22) can be supported by a front edge of the wrapping table (15) and a vertically movable support (14', 24, 34), and the support (14', 24, 34) can be raised in order to transfer the bale (22) into a wrapping position on the wrapping table (15).

2. The round baler according to claim 1, **characterized in that** the wrapping table (15) comprises a front and a rear roller (23, 26) which support the bale (22) in the wrapping position and can be driven in rotation in order to wrap the bale (22).

3. The round baler according to claim 2, **characterized in that** the front roller (23) forms the front edge of the wrapping table (15).

4. The round baler according to claim 2 or claim 3, **characterized in that** the rollers (23, 26) of the wrapping table (15) are mounted in a pivotably suspended frame.

5. The round baler according to claim 2 or claim 3, **characterized in that** the front roller (23) is retained by a connecting rod (29) which is pivotable independently of the rear roller (26) about an axis which is positioned behind the front roller (23).

6. The round baler according to one of claims 1 to 5, **characterized in that** the support (24) can be raised separately from the lower tailgate section (9).

7. The round baler according to one of claims 1 to 5, **characterized in that** the support (14', 34) is formed by a rear edge of the lower tailgate section (9).

8. The round baler according to claim 7, **characterized in that** the lower tailgate section (9) contains a group of baling rollers (14), with one (14') of them forming the rear edge.

9. The round baler according to claim 7, **characterized in that** the support (34) is disposed outside a circle formed by the baling rollers (10, 13, 14).

10. The round baler according to one of the preceding claims, **characterized in that** the lower tailgate section (9) can be lowered by swinging about a first axis (12) which runs adjacent to a front edge of the lower tailgate section (9).

11. The round baler according to one of the preceding claims, **characterized in that** the lower tailgate section (9) can be swung into the bale chamber (3) while the upper tailgate section (8) is in the baling position.

12. The round baler according to claim 11, **characterized in that** the lower tailgate section (9) can be swung into the bale chamber (3) about a second axis (27) which is adjacent to a rear edge of the lower tailgate section (9).

## Revendications

1. Presse à balles rondes avec un boîtier (6) entourant une chambre de pressage (3), qui comprend une section de base (7), une section supérieure de trappe arrière (8) pouvant être relevée depuis une position de pressage et une section inférieure de trappe arrière (9), et avec un dispositif enrouleur de balles (4), qui comprend un tablier enrouleur (15) disposé derrière le boîtier (6), **caractérisée en ce que** la section inférieure de trappe arrière (9) peut être abaissée pour distribuer une balle (22) depuis la chambre de pressage (3),
peut être supportée, dans la position abaissée de la section inférieure de trappe arrière (9) des balles (22), par un bord avant du tablier enrouleur (15) et par un support (14', 24, 34) mobile verticalement, et
le support (14', 24, 34) peut être relevé pour déplacer la balle (22) dans une position d'enroulement sur le tablier enrouleur (15).

2. Presse à balles rondes selon la revendication 1, **caractérisée en ce que** le tablier enrouleur (15) comprend un rouleau avant et un rouleau arrière (23, 26), qui supportent, dans la position d'enroulement, la balle (22) et peuvent être entraînés en rotation pour l'enrubannage de la balle (22).

3. Presse à balles rondes selon la revendication 2, **caractérisée en ce que** le rouleau avant (23) forme le bord avant du tablier enrouleur (15).

4. Presse à balles rondes selon la revendication 2 ou 3, **caractérisée en ce que** les rouleaux (23, 26) du tablier enrouleur (15) sont montés dans un châssis suspendu de manière à pouvoir pivoter.

5. Presse à balles rondes selon la revendication 2 ou 3, **caractérisée en ce que** le rouleau avant (23) est maintenu par un guidon (29), qui peut être pivoté autour d'un axe placé derrière le rouleau avant (23) indépendamment du rouleau arrière (26).

6. Presse à balles rondes selon l'une quelconque des revendications 1 à 5, **caractérisée en ce que** le support (24) peut être relevé séparément de la section inférieure de trappe arrière (9).

7. Presse à balles rondes selon l'une quelconque des revendications 1 à 5, **caractérisée en ce que** le support (14', 34) est formé par un bord arrière de la section inférieure de trappe arrière (9).

8. Presse à balles rondes selon la revendication 7, **caractérisée en ce que** la section inférieure de trappe arrière (9) contient un groupe de rouleaux de pressage (14), dont l'un (14') forme le bord arrière.

9. Presse à balles rondes selon la revendication 7, **caractérisée en ce que** le support (34) est disposé à l'extérieur d'un cercle des rouleaux de pressage (10, 13, 14) .

10. Presse à balles rondes selon l'une quelconque des revendications précédentes, **caractérisée en ce que** la section inférieure de trappe arrière (9) peut être abaissée par pivotement autour d'un premier axe (12), qui s'étend de manière adjacente à un bord avant de la section inférieure de trappe arrière (9).

11. Presse à balles rondes selon l'une quelconque des revendications précédentes, **caractérisée en ce que** la section inférieure de trappe arrière (9) peut être pivotée à l'intérieur de la chambre de pressage (3) tandis que la section supérieure de trappe arrière (8) se trouve dans la position de pressage.

12. Presse à balles rondes selon la revendication 11, **caractérisée en ce que** la section inférieure de trappe arrière (9) peut être pivotée autour d'un deuxième axe (27) adjacent par rapport à un bord arrière de la section inférieure de trappe arrière (9) à l'intérieur de la chambre de pressage (3).
